# EUROPÄISCHE PATENTSCHRIFT

(11) **EP 3 613 698 B1**
(45) Veröffentlichungstag und Bekanntmachung des Hinweises auf die Patenterteilung: **24.01.2024**
(21) Anmeldenummer: 19191761.6
(22) Anmeldetag: 14.08.2019
(51) Int. Cl.: B66C 13/08, B66C 13/46, G01C 15/00, G01C 15/10

(54) **SYSTEM ZUR POSITIONIERUNG UND NIVELLIERUNG**
SYSTEM FOR POSITIONING AND LEVELING
SYSTÈME DE POSITIONNEMENT ET DE NIVELLEMENT

(30) Priorität: 15.08.2018 DE 102018213739
(43) Veröffentlichungstag der Anmeldung: 26.02.2020
(73) Patentinhaber: Deutsches Zentrum für Luft- und Raumfahrt e.V., 51147 Köln (DE)
(72) Erfinder: Kottmeier, Sebastian, 28215 Bremen (DE); Orlowski-Feldhusen, Fabian, 28865 Lilienthal (DE)
(74) Vertreter: Heuking Kühn Lüer Wojtek PartGmbB

(56) Entgegenhaltungen:
- CN-A- 102 249 151
- CN-A- 106 744 509
- CN-A- 108 381 161
- CN-U- 204 823 796
- CN-U- 205 772 919
- US-A1- 2016 313 121

## Beschreibung

Die vorliegende Erfindung betrifft ein System zur Positionierung und Nivellierung, insbesondere zur Positionierung und Nivellierung eines Lastaufnahmemittels relativ zu einer Last, ein Verfahren zur Positionierung eines Lastaufnahmemittels relativ zu einer Last und die Verwendungen des erfindungsgemäßen Systems.

In der Entwicklungs-, Produktions- und Testphase von Kompaktsatelliten, beispielsweise mit einem Gewicht von 100 bis 500 kg, mit beweglichen oder entfaltbaren Strukturen ist es notwendig, relativ kleine Massen mit hohen Sicherheitsreserven zu bewegen. Dies geschieht in der Regel durch für diesen Zweck konstruierte oder als Fertigteil eingekaufte Lastaufnahmemittel, beispielsweise Ring-, Balken- oder Kreuztraversen.

Die verwendeten Baugruppen für solche Kompaktsatelliten sind u.a. mechanisch sehr empfindlich. Die Empfindlichkeit der transportierten Baugruppen erfordert eine sehr exakte Nivellierung und Ausrichtung des Lastaufnahmemittels zu den Anschlagpunkten der Baugruppe. Dies erfolgt in der Regel durch die Erfahrung von Kranführer und Anschlägern. Dennoch kann eine kleine Fehlausrichtung des Lastaufnahmemittels zum Kippen, Verkanten und Durchpendeln der Last führen.

Aus dem Stand der Technik sind bereits Verfahren und Vorrichtungen zur exakten Positionierung und Nivellierung von Lastaufnahmemitteln zu den anschlagpunkten von empfindlichen Lasten bekannt.

Beispielsweise ist bekannt, Raumfahrzeuge zu transportieren bzw. zu positionieren, indem entsprechende Lasten an Portalkränen durch Hebezeuge gehoben werden, beispielsweise durch Standard-Traversen wie Kreuz-, Doppelkreuz- oder Balkentraversen. Möglich ist auch das Heben durch problemspezifisch konstruierte Traversen, beispielsweise Ringtraversen mit starrer Dreipunktaufhängung. Das exakte Positionieren der Hebezeuge erfolgt dabei gemäß Stand der Technik manuell oder über Funk durch Kranführer und Anschläger. Bekannt ist auch die Verwendung von mehreren Kreuzlasern am Boden als Referenzmarkierungen.

Aus der deutschen Offenlegungsschrift DE 2 536 694 A1 ist eine Transportvorrichtung und insbesondere eine Transportvorrichtung zum Transportieren von Lasten zwischen zwei Orten, die eine begrenzte Bewegung relativ zueinander im dreidimensionalen Raum ausführen können, sowie ein Kran, der an dem zweiten Ort angeordnet ist, bekannt. Insbesondere ist die Anwendung dieser Anordnung für den Transport von Lasten zwischen einem Versorgungsschiff und einer Bohrplattform in einem Gewässer bzw. im Meer offenbart, wobei auf der Plattform ein Kran montiert ist, der relativ zu ihr drehbar ist und einen Ausleger hat, der sich über den Rand der Plattform hinaus erstreckt und von dem ein Haken herabhängt, um die Last zu heben oder zu senken. Außer bei ganz ruhiger See führt das Versorgungsschiff sowohl horizontale als auch vertikale Bewegungen aus, die der Wellenform einer See von etwa 3 Meter Wellenhöhe mit einer Periode von etwa 5 bis 10 Sekunden folgen. Die Größe des Kranes, die erforderlich ist, um Lasten von Versorgungsschiffen auf eine Plattform bis zu etwa 30 Meter über Seehöhe anzuheben, erfordert einen massiven Aufbau mit langsamer Ansprechzeit auf Bewegungen. Ein Ausgleich der Bewegungen des Hakens, direkt durch Antrieb eines Kranauslegers und/oder seines Seiles, um die Schwingungen des Versorgungsschiffes auszuschalten, um zu erreichen, dass der Haken der Bewegung folgt, ist schwierig. Eine entsprechende Steuervorrichtung weist eine Meßeinrichtung zum Bestimmen der Position des Hakens bezüglich der Last und eine auf die Meßeinrichtung ansprechende Steuereinrichtung, um den Haken in einer vorgegebenen Position relativ zu der Last zu halten, auf.

Aus der US-amerikanischen Offenlegungsschrift US 2016 / 313 121 A1 ist eine Vorrichtung und ein Verfahren zum Projizieren sichtbarer ebener Laserlinien auf eine Arbeitsfläche und zum Messen von Abständen entlang der ebenen Laserlinien bekannt. Das Gerät verfügt über ein selbstnivellierendes Lasergehäuse, mit dem die Laser bei Aktivierung nivellieren können. Das Gerät enthält außerdem separate Entfernungsmesslaser und ein Handdisplay, mit dem Entfernungen von der Mitte des Geräts gemessen werden können.

Aus der europäischen Offenlegungsschrift EP 1 843 128 A2 ist ein Kreuzlinienlaser mit einem Hauptkörpergehäuse mit einer Vielzahl von Fenstern zum Einstrahlen eines Laserlichts in vertikaler und horizontaler Richtung bekannt, wobei ein schwenkbares Element innerhalb des Hauptkörpergehäuses angeordnet und in der Lage ist, über einen Kardanmechanismus eine Laserlichtquelleneinheit zu schwenken, die mit dem schwenkbaren Element verbunden ist, wobei ein Regulierungselement ein aufprallabsorbierendes Material aufweist, das in dem Hauptkörpergehäuse positioniert ist entgegengesetzt zu einem unteren freien Ende des schwenkbaren Elements, wobei das untere freie Ende des schwenkbaren Elements in das Regulierungselement eine Regulierungsöffnung bewegbar ist, die in dem Regulierungselement ausgebildet ist. Weiterhin ist eine Kontaktfläche definiert, mit der das untere freie Ende des schwenkbaren Elements in Kontakt treten kann, wenn sich das schwenkbare Element bewegt, wobei eine Vielzahl von Nuten in der Kontaktfläche der Regelöffnung ausgebildet und voneinander beabstandet sind.

CN 204 823 796 U offenbart ein System mit den Merkmalen des Oberbegriffs des Anspruchs 1.

Problematisch bei den aus dem Stand der Technik bekannten Verfahren ist, dass bei der Verwendung von nicht starr angebrachten Traversen schon beim Anbau an den Kran gegenüber der Horizontallage durch die Reibung zwischen Aufnahmelasche und Kranhaken verkippen. Durch die geringe Traglast beim Transport von Kompaktsatelliten von maximal 500 kg kann es vorkommen, dass der Kranhaken nicht in Nulllage gezogen wird. Die Nutzung von Schmierstoffen, um den Kranhaken leichtgängiger zu machen, ist in Reinraumumgebungen nicht möglich. Beim Heben durch problemspezifisch konstruierte Traversen muss die Traversennulllage aufwändig vor jedem Gebrauch der Traverse erneut kalibriert werden. Werden die exakte Positionierung und Nivellierung manuell beziehungsweise über Funk durch Kranführer und Anschläger festgelegt, so ist dies erfahrungsabhängig und durch die Entfernung von Traverse und Anschlagpunkten relativ unpräzise. Für die Nutzung von mehreren Kreuzlasern am Boden als Referenzmarkierungen ist es notwendig, die Ausrichtung der Kreuzlaser zueinander zu kalibrieren. Des Weiteren sind die schlechte Sichtbarkeit und Leistungsverluste durch große Distanzen problematisch.

Aufgabe der vorliegenden Erfindung ist es daher, ein System zur Positionierung und Nivellierung eines Lastaufnahmemittels relativ zu einer Last zur Verfügung zu stellen, mit dem die Nachteile des Standes der Technik behoben werden können, und ein einfach und verlässlich durchführbares Verfahren zur Positionierung eines Lastaufnahmemittels relativ zu einer Last bereitzustellen.

Erfindungsgemäß wird diese Aufgabe durch ein System mit den Merkmalen des unabhängigen Anspruches 1 gelöst. Vorteilhafte Weiterbildungen des Systems ergeben sich aus den Unteransprüchen 2 bis 7. Die Aufgabe wird ferner durch die Verfahren nach Anspruch 8 oder 9 gelöst. Des Weiteren werden die erfindungsgemäßen Aufgaben durch die Verwendungen gemäß den Ansprüchen 10, 11 und 12 gelöst.

Ein erfindungsgemäßes System zur Positionierung und Nivellierung eines Lastaufnahmemittels relativ zu einer Last ist dadurch gekennzeichnet, dass es eine Nivelliereinheit aufweist, in der mindestens eine Kreuzlaserdiode kardanisch aufgehängt ist. Nivelliereinheiten sind dem Fachmann an sich bekannt und enthalten beispielsweise eine Lasereinheit, die einen Strahl auf ein Zielobjekt projizieren können.

Auch Kreuzlaserdioden sind dem Fachmann an sich bekannt. Diese weisen einen Laserstrahl auf, der auf einer Projektionsfläche ein Kreuz darstellt.

Erfindungsgemäß ist eine solche, an sich bekannte Kreuzlaserdiode kardanisch in der Nivelliereinheit aufgehängt. Eine kardanische Aufhängung ist eine Lagerung, die eine allseitige Drehung ermöglicht. Der Körper wird mit zwei Zapfen, deren Achse durch den Schwerpunkt geht, in einem Ring aufgehängt. Dieser Ring ist wiederum mit zwei Zapfen, die um 90° gegen die des Körpers versetzt sind und deren Achse durch den Schwerpunkt des aufzuhängenden Körpers geht, in einem zweiten Ring drehbar aufgehängt. Dieser zweite Ring steht senkrecht zum ersten Ring und ist mit zwei Zapfen um 90° versetzt wiederum drehbar gelagert.

In der Ausführungsform gemäß Anspruch 1 ist das erfindungsgemäße System dazu geeignet, im Haken-Angriffspunkt eines Lastaufnahmemittels, beispielsweise einer Kreuz-, Doppelkreuz- oder Balkentraverse, befestigt zu werden und so den Lastvektor des Krans zu markieren. So ist es mit dem erfindungsgemäßen System möglich, das Lastaufnahmemittel des Krans hoch präzise über den Anschlagpunkten und im Schwerpunkt der zu transportierenden Last zu positionieren.

Das erfindungsgemäße System weist mindestens zwei fix an dem System angebrachte Laser weist. Diese fix angerachten Laser können im Allgemeinen alle dem Fachmann bekannte Laser sein. Bevorzugt sind die mindestens zwei fix an dem System angebrachten Laser Laserdioden, weiter bevorzugt Punktlaserdioden.

Erfindungsgemäß strahlen die zwei fix angebrachten Laser bevorzugt in die gleiche bzw. eine ähnliche Richtung wie die kardanisch aufgehängte Kreuzlaserdiode. In einer weiter bevorzugten Ausführungsform liegen vier, sechs oder acht fix an dem System angebrachte Laser, insbesondere Laserdioden, weiter bevorzugt Punktlaserdioden, vor. Diese folgen bei einer Verkippung der Grundfläche dem Flächennormalenvektor. Aus der Bodenspur der fünf Laser kann die Ausrichtung des Lastvektors zur Referenzfläche abgelesen werden. Dies ermöglicht z.B. eine Kalibrierung der Traverse vor dem Einsatz. Das Prinzip kann für horizontale und vertikale Anwendungen genutzt werden. In diesem bevorzugten Fall sind die vier fix angebrachten Laser weiter bevorzugt in einem Linienzug, Rechteck, einer Raute oder einem Quadrat angeordnet, wobei die kardanisch aufgehängte Kreuzlaserdiode dabei bevorzugt im Mittelpunkt des Linienzugs, des Rechtecks, der Raute oder des Quadrats vorliegt. Diese Anordnung hat den Vorteil, dass eine exakte Nivellierung eines Lastaufnahmemittels, an das das erfindungsgemäße System angebracht ist, dadurch erkannt werden kann, dass die Abbildungen der vier fix angebrachten Laser auf einer Projektionsfläche, beispielsweise dem Boden oder einer Last, in gleichem Abstand zu dem Mittelpunkt der Abbildung der Kreuzlaserdiode vorliegen.

In einer weiteren bevorzugten Ausführungsform des erfindungsgemäßen Systems liegt dieses in einem Gehäuse vor, welches wiederentfernbar an einem Gegenstand befestigt werden kann. Durch diese bevorzugte Ausführungsform ist es möglich, das erfindungsgemäße System an verschiedenen Gegenständen anzubringen, beispielsweise an verschiedenen Lastaufnahmemitteln. Dies hat den ökonomischen Vorteil, dass ein erfindungsgemäßes System genügt, um an verschiedenen Lastaufnahmemitteln verwendet werden zu können. Eine wiederentfernbare Befestigung kann beispielsweise durch eine Magnet-, Schraub- und/oder Klebeverbindung verwirklicht werden. In dieser Ausführungsform kann das erfindungsgemäße System sowohl vertikal als auch horizontal verwendet werden.

Das erindungsgemäße System ist an einem Lastaufnahmemittel angebracht und der mindestens eine kardanisch aufgehängte Laser und die mindestens zwei fix angebrachten Laser strahlen in Richtung einer an dem Lastaufnahmemittel befestigten Last. Das erfindungsgemäße System wird bevorzugt bei empfindlichen und wertigen Lasten angewendet, beispielsweise bei Satelliten, insbesondere Kompaktsatelliten mit einem Gewicht von 100 bis 500 kg, bevorzugt mit beweglichen oder entfaltbaren Strukturen.

In einer weiteren vorteilhaften Ausführungsform ist das Lastaufnahmemittel eine Kreuz-, Doppelkreuz- oder Balkentraverse.

In einer weiter bevorzugten Ausführungsform weist das erfindungsgemäße System zusätzlich einen Winkelmesser und einen Laserentfernungsmesser auf. Entsprechende Winkelmesser und Laserentfernungsmesser sind dem Fachmann an sich bekannt.

Durch die Verwendung von mindestens zwei, bevorzugt vier, sechs oder acht Laserpunkten als Linienzug, Rechteck, Raute oder Quadrat in definiertem Abstand sowie eines achsparallelen Laserentfernungsmessers kann das erfindungsgemäße System auch zur einfachen Winkelmessung eingesetzt werden.

In einer weiteren bevorzugten Ausführungsform des erfindungsgemäßen Systems weist es eine Winkelbeschränkung auf. Eine solche Winkelbeschränkung kann beispielsweise so ausgestaltet werden, dass eine Bewegung des vorliegenden Kardangelenks lediglich in zwei Achsen beweglich ist, wodurch auch Ausrichtungen außerhalb des Normalenvektors eingestellt werden können. In dieser Ausführungsform, insbesondere in Verbindung mit der Möglichkeit, das erfindungsgemäße System wiederentfernbar an Gegenständen zu befestigen, kann das erfindungsgemäße System dazu verwendet werden, Lasten, insbesondere schwere Güter, beispielsweise Container, Transportvorrichtungen, Fahrzeuge, Bauelemente, Baugruppen, zueinander oder relativ zu weiteren Gegenständen auszurichten.

Die vorliegende Erfindung betrifft auch ein Verfahren zur Positionierung eines Lastaufnahmemittels relativ zu einer Last, wobei mit dem kardanisch befestigten Kreuzlaserdiode des erfindungsgemäßen Systems der Lastvektor des Lastaufnahmemittels auf der Last abgebildet wird, das Lastaufnahmemittel über der Last bewegt wird, und die exakte Position des Lastaufnahmemittels relativ zu der Last erreicht ist, sobald die Abbildung in einem vorher festgelegten Bereich auf der Last liegt. Der vorher festgelegte Bereich kann erfindungsgemäß so ausgestaltet werden, dass die Abbildungen der bevorzugt vorhandenen fix angebrachten Laser auf der Last, in einem regelmäßigen Muster, beispielsweise einem Linienzug,

Rechteck, Rauter oder Quadrat, erscheinen und jeweils den gleichen Abstand von der Mitte oder den Enden den Kreuzes aufweisen, welches durch die Kreuzlaserdiode abgebildet wird.

Die vorliegende Erfindung betrifft des Weiteren auch ein Verfahren zur Nivellierung eines Lastaufnahmemittels, wobei das Lastaufnahmemittel so lange bewegt wird, bis die Abbildungen des kardanisch aufgehängten Lasers und der mindestens zwei fix angebrachten Laser auf einer Projektionsfläche, beispielsweise dem Boden oder einer Last, in einem vorher festgelegten Verhältnis zueinanderstehen. Die Bewegung des Lastaufnahmemittels kann dabei darin bestehen, dass es als Ganzes in mindestens eine Raumrichtung bewegt wird oder das Lastaufnahmemittel durch Kipp-, Absenk- und/oder Hebebewegungen in eine bestimmte Position gebracht wird.

Die vorliegende Erfindung betrifft auch die Verwendung des erfindungsgemäßen Systems zur Positionierung eines Lastaufnahmemittels relativ zu einer Last.

Die vorliegende Erfindung betrifft auch die Verwendung des erfindungsgemäßen Systems zur Nivellierung eines Lastaufnahmemittels.

Die vorliegende Erfindung betrifft auch die Verwendung des erfindungsgemäßen Systems zur Ausrichtung wenigstens einer Last relativ zu weiteren Gegenständen.

Bezüglich der erfindungsgemäßen Verfahren und Verwendungen gilt das zu dem erfindungsgemäßen System Gesagte entsprechend.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen. Die im Folgenden dargestellten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst, der ausschließlich durch die beigefügten Ansprüche bestimmt wird.

Dabei zeigen die Abbildungen:
Fig 1: eine erste Ausführungsform eines erfindungsgemäßen Systems zur Positionierung und Nivellierung eines Lastaufnahmemittels relativ zu einer Last.
Fig 2: eine zweite Ausführungsform eines erfindungsgemäßen Systems zur Positionierung und Nivellierung eines Lastaufnahmemittels relativ zu einer Last.

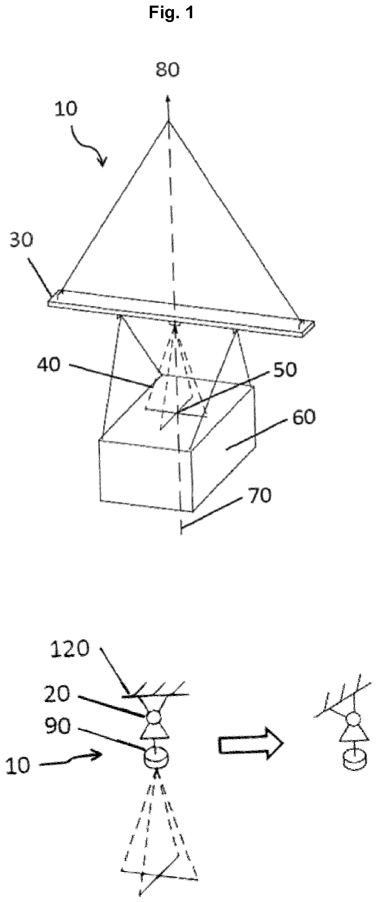

Fig. 1 zeigt eine erste Ausführungsform der vorliegenden Erfindung. Dabei ist eine Kreuzlaserdiode (5) kardanisch in einer Nivelliereinheit (10) aufgehängt. Die Nivelliereinheit (10) ist im Haken-Angriffspunkt an einem Lastaufnahmemittel (30) befestigt und markiert den Lastvektor (70) des Krans (80). Dies ermöglicht ein präzises Positionieren des Krans (80) über den Anschlagpunkten und im Schwerpunkt (50) der Last (60).

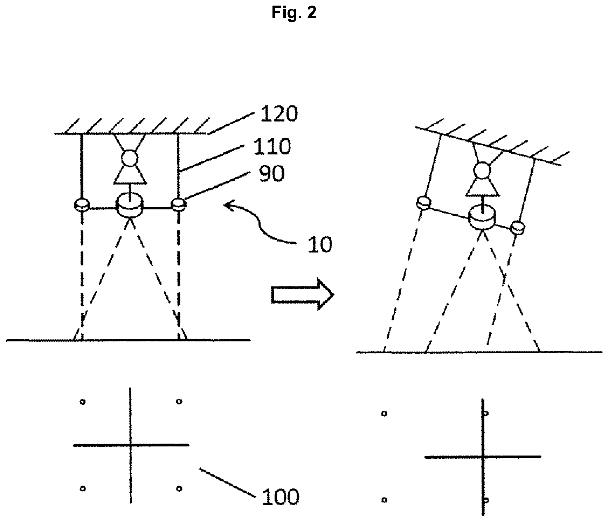

Fig. 2 zeigt eine weitere Ausführungsform der vorliegenden Erfindung. Dabei ist das System gemäß Fig. 1 durch 4 Laserdioden (90), die fix an der Nivelliereinheit (10) angebracht sind, ergänzt. Das Lastaufnahmemittel (30) kann nun nivelliert werden, indem es so lange bewegt wird, bis die die Strahlen der kardanisch aufgehängten Kreuzlaserdiode (5) und der vier fix angebrachten Laserdioden (90) parallel verlaufen, was sich durch ein gleichmäßiges Bild auf dem Boden bzw. der Last (60) zeigt.

### Bezugszeichenliste

- 5: Kreuzlaserdiode
- 10: Nivelliereinheit
- 20: kardanische Aufhängung
- 30: Laseraufnahmemittel
- 40: Laserkreuz
- 50: Schwerpunkt der Last
- 60: Last
- 70: Lastvektor
- 80: Kran
- 90: fix angebrachte Laser
- 100: Bodenspur
- 110: Gehäuse
- 120: wiederentfernbare Befestigung

## Patentansprüche

1. System zur Positionierung und Nivellierung eines Lastaufnahmemittels (30) relativ zu einer Last (60), wobei das System eine Nivelliereinheit (10) aufweist, und
**dadurch gekennzeichnet,**
**dass** in der Nivelliereinheit (10) mindestens eine Kreuzlaserdiode (5) kardanisch aufgehängt ist, wobei das System zusätzlich mindestens zwei fix an dem System angebrachte Laser (90) aufweist, wobei das System so konfiguriert ist, an einem Lastaufnahmemittel (30) angebracht zu werden, wobei die mindestens eine kardanisch aufgehängte Kreuzlaserdiode (5) und die mindestens zwei fix angebrachten Laser (90) in Richtung einer an dem Lastaufnahmemittel (30) befestigbaren Last (60) strahlen.

2. System nach Anspruch 1,
**dadurch gekennzeichnet,**
**dass** die mindestens zwei fix an dem System angebrachten Laser (90) Laserdioden sind.

3. System nach einem der vorherigen Ansprüche,
**dadurch gekennzeichnet,**
**dass** vier fix an dem System angebrachte Laser (90) vorliegen.

4. System nach einem der vorherigen Ansprüchen,
**dadurch gekennzeichnet,**
**dass** es in einem Gehäuse (110) vorliegt, welches wiederentfernbar an einem Gegenstand befestigt werden kann.

5. System nach einem der vorherigen Ansprüche,
**dadurch gekennzeichnet,**
**dass** es zusätzlich einen Winkelmesser und einen Laserentfernungsmesser aufweist.

6. System nach einem der vorherigen Ansprüche,
**dadurch gekennzeichnet,**
**dass** das Lastaufnahmemittel (30) eine Kreuz-, Doppelkreuz- oder Balkentraverse ist.

7. System nach einem der vorherigen Ansprüche,
**dadurch gekennzeichnet,**
**dass** es eine Winkelbeschränkung aufweist.

8. Verfahren zur Positionierung eines mit einem System gemäß einem der Ansprüche 1 bis 7 ausgestatteten Lastaufnahmemittels (30) relativ zu einer Last (60),
**dadurch gekennzeichnet,**
**dass** mit der kardanisch befestigten Kreuzlaserdiode (5) des Systems gemäß einem der Ansprüche 1 bis 7 der Lastvektor (70) des Lastaufnahmemittels (30) 20 auf der Last (60) abgebildet wird, das Lastaufnahmemittel (30) über der Last (60) bewegt wird, und die exakte Position des Lastaufnahmemittels (30) relativ zu der Last erreicht ist, sobald die Abbildung in einem vorher festgelegten Bereich auf der Last liegt.

9. Verfahren zur Nivellierung eines mit einem System gemäß einem der Ansprüche 1 bis 7 ausgestatteten Lastaufnahmemittels (30),
**dadurch gekennzeichnet,**
**dass** das Lastaufnahmemittel (30) so lange bewegt wird, bis die Abbildungen der kardanisch aufgehängten Kreuzlaserdiode (5) und der mindestens zwei fix angebrachten Laser (90) auf einer Projektionsfläche in einem vorher festgelegten Verhältnis zueinanderstehen.

10. Verwendung des Systems nach einem der Ansprüche 1 bis 7 zur Positionierung eines Lastaufnahmemittels (30) relativ zu einer Last (60).

11. Verwendung des Systems nach einem der Ansprüche 1 bis 7 zur Nivellierung eines Lastaufnahmemittels (30).

12. Verwendung des Systems nach einem der Ansprüche 1 bis 7 zur Ausrichtung wenigstens einer Last (6) relativ zu weiteren Gegenständen.

## Claims

1. A system for positioning and leveling a load-carrying device (30) relative to a load (60), wherein the system has a leveling unit (10),
**characterized in that**
in the leveling unit (10) at least one cross laser diode (5) is gimballed, the system additionally having at least two lasers (90) that are permanently attached to the system, the system is configured for being attached to a load-carrying device (30) and the at least one gimballed cross laser diode (5) and in which the two or more permanently attached lasers (90) radiate in the direction of the load (60) are attachable to the load-carrying device (30).

2. A system according to Claim 1,
**characterized in that**
the two or more lasers (90) which are permanently attached to the system are laser diodes.

3. A system according to one of the previous claims
**characterized in that**
there are four lasers (90) permanently attached to the system.

4. A system according to one of the previous claims
**characterized in that**
it is present in a housing (110) that can be removably attached to an object.

5. A system according to one of the previous claims
**characterized in that**
it additionally has a protractor and a laser range finder.

6. A system according to one of the previous claims,
**characterized in that**
the load-carrying device (30) is a cross, double cross, or beam traverse.

7. A system according to one of the previous claims,
**characterized in that**
it has an angular restriction.

8. A procedure for positioning a system according to one of the claims 1 to 7 with a load-carrying device (30) relative to a load (60),
**characterized in that**
the load vector (70) of the load-carrying device (30) is imaged on the load (60) with the gimballed cross laser diode (5) of the system according to one of Claims 1 to 7, the load-carrying device (30) moves above the load (60), and the exact position of the load-carrying device (30) relative to the load is reached as soon as the image is within a predetermined range on the load.

9. A procedure for leveling a system according to one of the claims 1 to 7 with a load-carrying device (30),
**characterized in that**
the load-carrying device (30) is moved until the images of the gimballed cross laser diode (5) and the two or more permanently attached lasers (90) on a projection surface are in a predetermined relationship to one another.

10. Use of the system according to one of the Claims 1 to 7 for positioning a load-carrying device (30) relative to a load (60).

11. Use of the system according to one of the Claims 1 to 7 for leveling a load-carrying device (30).

12. Use of the system according to one of the Claims 1 to 7 for aligning at least one load (60) relative to additional objects.

## Revendications

1. Système de positionnement et de nivellement d'un accessoire de levage (30) par rapport à une charge (60), dans lequel le système présente une unité de nivellement (10), et
**caractérisé en ce que**
dans l'unité de nivellement (10) est suspendue par cardan au moins une diode à laser en croix (5), le système présentant en outre au moins deux lasers appliqués de façon fixe au niveau du système (90), le système étant configuré pour pouvoir être appliqué au niveau d'un accessoire de levage (30), la diode à laser en croix (5) suspendue par cardan, au moins au nombre de une, et les lasers (90) appliqués de façon fixe, au moins au nombre de deux, rayonnant dans la direction d'une charge (60) fixée au niveau de l'accessoire de levage (30).

2. Système selon la revendication 1,
**caractérisé en ce que**
les lasers (90) appliqués de façon fixe au niveau du système, au moins au nombre de deux, sont des diodes à laser.

3. Système selon l'une des revendications précédentes,
**caractérisé en ce que**
il existe quatre lasers (90) appliqués de façon fixe au niveau du système.

4. Système selon l'une des revendications précédentes,
**caractérisé en ce que**
il se situe dans un boîtier (110) qui peut être fixé de façon amovible à un objet.

5. Système selon l'une des revendications précédentes,
**caractérisé en ce que**
il présente de plus un goniomètre et un télémètre laser.

6. Système selon l'une des revendications précédentes,
**caractérisé en ce que**
l'accessoire de levage (30) est une traverse en croix, en double croix ou en barre.

7. Système selon l'une des revendications précédentes,
**caractérisé en ce que**
il présente une restriction angulaire.

8. Procédé de positionnement d'un accessoire de levage (30) équipé selon l'une des revendications 1 à 7 par rapport à une charge (60),
**caractérisé en ce que**
le vecteur de charge (70) de l'accessoire de levage (30) est représenté sur la charge (60) avec la diode laser en croix fixée par cardan (5) du système selon l'une des revendications 1 à 7, l'accessoire de levage (30) est déplacé au-dessus de la charge (60), et la position exacte de l'accessoire de levage (30) par rapport à la charge est atteinte dès que la représentation repose dans une zone préalablement définie sur la charge.

9. Procédé de nivellement d'un accessoire de levage (30) équipé d'un système selon l'une des revendications 1 à 7,
**caractérisé en ce que**
l'accessoire de levage (30) est déplacé jusqu'à ce que les représentations de la diode laser en croix suspendue par cardan (5) et les lasers appliqués de façon fixe (90), au moins au nombre de deux, se trouvent dans une relation préalablement définie sur une surface de projection.

10. Utilisation du système selon l'une des revendications 1 à 7 pour positionner un accessoire de levage (30) par rapport à une charge (60).

11. Utilisation du système selon l'une des revendications 1 à 7 pour niveler un accessoire de levage (30).

12. Utilisation du système selon l'une des revendications 1 à 7 pour orienter au moins une charge (60) par rapport à d'autres objets.
